# EUROPÄISCHE PATENTSCHRIFT

(11) **EP 2 289 686 B1**
(45) Veröffentlichungstag und Bekanntmachung des Hinweises auf die Patenterteilung: **18.01.2017**
(21) Anmeldenummer: 10179830.4
(22) Anmeldetag: 14.08.2002
(51) Int. Cl.: B29C 45/56, B29C 45/80, B60J 1/00, B29C 45/00

(54) **Verfahren zum Herstellen flächenartiger Kunststoff-Formteile, insbesondere Kunststoffscheiben**
Method and device for producing planar plastic moulded parts, in particular plastic panes
Procédé pour produire des pièces moulées planes en matière plastique, notamment des disques en matières plastique

(30) Priorität: 27.08.2001 DE 10141858
(43) Veröffentlichungstag der Anmeldung: 02.03.2011
(62) Teilanmeldung aus: 02774514.0
(73) Patentinhaber: KraussMaffei Technologies GmbH, 80997 München (DE)
(72) Erfinder: Klotz, Bernd, 85232 Günding/Bergkirchen (DE)
(74) Vertreter: Wilhelm, Ludwig

(56) Entgegenhaltungen:
- EP-A1- 0 673 746
- DE-A1- 19 809 723
- GB-A- 1 110 534
- GB-A- 1 182 130
- JP-A- 3 058 819
- JP-A- 9 174 631
- JP-A- 2001 047 482
- JP-A- 2001 047 484

## Beschreibung

Die Erfindung bezieht sich auf ein Verfahren zum Herstellen von dickwandigen, flächenartigen Kunststoff-Formteilen, insbesondere Kunststoffscheiben.

Insbesondere in der Automobilindustrie gibt es Bestrebungen, Glasscheiben durch Kunststoffscheiben zu ersetzen, die hinsichtlich verschiedener Eigenschaften wie Gewicht oder Splitterbildung Glasscheiben überlegen sind. Andererseits müssen auch Kunststoffscheiben mit sehr guter und reproduzierbarer Oberflächenqualität hergestellt werden, was mit bekannten Verfahren kaum oder nur sehr aufwendig möglich ist, so dass sich Kunststoffscheiben an Kraftfahrzeugen bisher lediglich als Sonnendächer durchgesetzt haben, nicht jedoch als Seiten-, Heck- oder gar Frontscheiben.

Optische Oberflächen bei nicht sehr großflächigen Teilen mit gleichmäßiger Wandstärke werden im Normalfall in einem Spritzgießprozess hergestellt, wobei Kunststoffmasse in einer Füllphase über kleindimensionierte Kanäle in eine Formkavität eingebracht wird. Weil amorphe Kunststoffe in der Abkühlphase eine hohe Dichtereduktion (Materialschwund, ca. 10 bis 20%) zeigen, wird dieser Materialschwund in einer folgenden Nachdruckphase über Nachfüttern von plastischer Schmelze zum Spritzkolben der Spritzgießmaschine ausgeglichen. Dabei können sich jedoch Inhomogenitäten ergeben, so dass dieses Verfahren für großflächige Teile nicht geeignet ist.

Beim sog. Standardspritzprägeprozess wird in einer ersten Füllphase in eine vorvergrößerte Kavität Kunststoffmasse eingebracht und anschließend mittels einer Werkzeugbewegung verprägt. Dieses Standard-Spritzprägeverfahren eignet sich für einfache optische Teile wie Linsen, wobei durch das Verprägen Einfallstellen als Folge von Materialschwund vermieden werden. Zwar könnte man dieses Verfahren auch für großflächige Kunststoffteile einsetzen, dabei ist jedoch zu beachten, dass der Prägeweg sehr genau eingehalten werden muss, um reproduzierbare Qualitäten zu erzeugen. Am Beispiel von Automobilverscheibungen sind dies wenige Zehntel Millimeter, die bei den dafür notwendigen großen Maschinen (> 2000 Tonnen Schließkraft) nur schwer reproduzierbar sind.

Varianten des Spritzprägeverfahrens sind beispielsweise aus der EP-A-0144622 und der US-A-4828769 bekannt, bei denen während des Prägens Material aus der Kavität herausgepresst wird bzw. der Prägevorgang schon während des Einfüllens begonnen wird.

Die WO 98/10417 beschreibt ein Verfahren zum Herstellen sehr dünnwandiger Kunststoffteile wie CDs. Bei diesem Verfahren wird Kunststoffmasse so in eine Form eingespritzt, daß vor dem vollständigen Füllen sich die Form öffnet.

Aus der JP 09 174631 A ist ein Verfahren zum Herstellen von Kunststoff-Formteilen bekannt, wobei zwei Formhälften in der Formtrennebene mit ihren einander zugewandten Flächen auf Anschlag zugefahren werden und Kunststoffmaterial in die so gebildete Kavität eingespritzt wird. Nachdem sich an der Kavitätenfläche eine Haut gebildet hat, wird weiteres Kunststoffmaterial eingespritzt und die Formhälften gegen die Schließkraft aufgefahren. Dabei bildet sich ein Spalt zwischen den Formhälften, der von dem Hautmaterial überbrückt wird, so daß kein Material aus der Kavität austreten kann. Nachfolgend werden die Formhälften wieder bis auf Anschlag zusammengefahren.

Aus der WO 98/53975 ist eine Form mit einem elastisch gelagerten Kern bekannt, der sich beim Einspritzen von Kunststoffmasse verlagert, um anschließend Schwindungsverluste auszugleichen. Durch die elastische Lagerung bildet der Kern ein schwimmendes System, so daß es fraglich erscheint, ob damit genau definierte Endwandstärken erzielbar sind.

Aus der JP3058819A ist ein Verfahren nach dem Oberbegriff des Anspruchs 1 bekannt.

Der Erfindung liegt die Aufgabe zugrunde, ein Verfahren anzugeben, mit dem großflächige Kunststoffteile mit guten optischen Eigenschaften hergestellt werden können.

Diese Aufgabe erfolgt durch ein Verfahren gemäß Anspruch 1 gelöst; die abhängigen Ansprüche betreffen vorteilhafte Weiterentwicklungen der Erfindung.

Zunächst wird die Formkavität eines Formwerkzeuges vollständig gefüllt und anschließend weiteres Material derart nachgefüllt dass sich die Form aufdehnt (aufatmet). Somit startet der Prägeprozess bei geschlossenem Werkzeug, so dass das Problem des sehr genauen Prägeweges nicht auftritt.

Beim Standardspritzgießen ist die Dicke des Kunststoffformteils stark abhängig von der Kavitätendicke. Diese ist werkzeuggeometrisch genau definiert. Anders als bei Einspritzprägeprozessen wird die Kavität jedoch gezielt und gewollt in einen schwimmenden Zustand gebracht. Die Teilendicke ist somit nicht durch die Kavitätendicke definiert sondern durch die Dosiergenauigkeit. Mittels eines eingebauten, hochauflösenden Wegaufnehmers ist es möglich, beim Atmungsprägen Teilendwandstärken von der Exaktheit wie beim Standardspritzgießen zu erzeugen, jedoch mit deutlich verbesserter Homogenität des gefertigten Teils und damit mit verbesserten optischen Eigenschaften.

Beim Standardspritzprägen müssen sehr genaue Prägewege von wenigen Hundertstel Millimeter realisiert werden, um ein reproduktionsgenaues Produzieren zu ermöglichen. Dies ist bei Großmaschinen nicht oder nur schwer möglich, wenn man Plattengrößen von mehreren Quadratmetern betrachtet.

Weil das Spritzgießwerkzeug beim Atmungsprägen im ersten Prozessabschnitt vollständig geschlossen wird, kann der Prägeprozess nach der Füllphase aus einer definierten Position begonnen werden. Die Reproduktionsgenauigkeit des Prägeprozesses ist somit eine Funktion der Dosiergenauigkeit der Einspritzeinheit und des Schließkraftprofils.

Ein einseitiges Aufatmen einer Schließeinheit kommt dadurch zustande, dass eine großflächige Kavität von einer Seite angespritzt wird, wobei im Bereich des Angusses ein erhöhter Innendruck auftritt. Diesem Effekt wird entgegengewirkt, indem auf der Seite, wo eine einseitig erhöhte resultierende Öffnungskraft erzeugt wird, eine gegenläufige höhere Schließkraft eingeleitet werden kann.

Dieser Prozess kann beispielsweise dadurch realisiert werden, dass einseitiges Aufatmen gemessen wird und die Schließzylinder auf der Seite der einseitigen Öffnung mit einer höheren Schließkraft versorgt werden als auf der anderen Seite. Dieser Prozess kann auch geregelt erfolgen, so dass die Form absolut parallel aufatmet.

Spritzgießmaschinen weisen in der Regel eine feste Formaufspannplatte und eine dazu parallele bewegbare Aufspannplatte auf. Die Formaufspannplatten tragen jeweils eine Formhälfte, und durch Bewegen der beweglichen Formaufspannplatte wird die Form mit einer einstellbaren Schließkraft verschlossen. Der festen Formaufspannplatte ist in der Regel eine Schneckeneinheit zugeordnet, wobei in der Schneckeneinheit plastifiziertes Kunststoffmaterial über einen Angusskanal durch die feste Formaufspannplatte in die Kavität der Form eingeleitet wird.

Die bewegliche Formaufspannplatte wird über Antriebe bewegt, die auch die Schließkraft ausüben. Diese sind beispielsweise vier Hydraulikzylinder, die bei rechteckigen Platten beispielsweise im Bereich der Ecken angreifen; auch Elektroantriebe werden eingesetzt.

Spritzgießmaschinen der oben beschriebenen Bauart sind allgemein bekannt (beispielsweise Baureihe C oder MC der Krauss Maffei Kunststofftechnik GmbH) und werden deshalb nicht näher erläutert.

Es kann an der beweglichen Aufspannplatte mindestens ein Weggeber vorgesehen sein, der bei der Nachfüllung der Kavität ein Aufatmen der Form und eine damit verbundene Verlagerung der beweglichen Aufspannplatte ermittelt. Auf diese Weise kann der Nachfüllvorgang soweit durchgeführt werden, bis die Formaufspannplatte bzw. die Form eine präzise Position erreicht hat.

Bevorzugt sind mehrere Weggeber vorgesehen, insbesondere im Bereich der Antriebe. Kommt es zu unterschiedlichen Bewegungen in unterschiedlichen Bereichen der Formaufspannplatte, so kann die Schließkraft des Antriebs, in dessen Bereich die größte Verlagerung auftritt, erhöht werden bzw. in Bereichen, in denen die geringste Verlagerung auftritt, vermindert werden. Auf diese Weise kann ein exakt paralleler Verlauf der Formaufspannplatte und damit ein exakt paralleles Aufatmen sichergestellt werden. Dies gestaltet sich insbesondere bei hydraulischen Maschinen einfach, wenn die Hydrauliksysteme der einzelnen Antriebe miteinander kommunizieren, da in diesem Fall der Ausgleich automatisch erfolgt.

Damit die Formkontur beim erfindungsgemäßen Verfahren nicht überspritzt werden kann, werden vorzugsweise an sich bekannte Tauchkantenwerkzeuge verwendet, bei denen sichergestellt ist, dass auch bei einer Bewegung der Formhälfte kein Material aus der Form austritt.

Ein Ausführungsbeispiel der Erfindung wird anhand der beigefügten Zeichnungen erläutert. Es zeigen:
- Fig. 1 bis 3: einen schematischen Querschnitt durch ein Formwerkzeug in verschiedenen Phasen eines Herstellungsvorganges und
- Fig. 4: Graphen für verschiedene Parameter im Spritzgießvorgang.

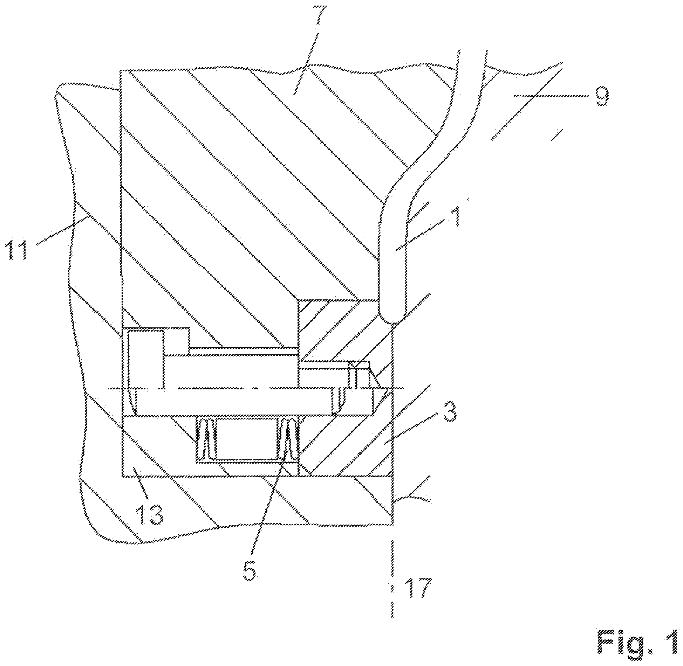

Gemäß Fig.1 ist eine bewegliche Formhälfte 7 auf einer beweglichen Formaufspannplatte 11 angebracht und bildet zusammen mit einer feststehenden Formhälfte 9, die auf einer nicht dargestellten festen Formaufspannplatte angebracht ist, eine Kavität 1. Der Rand der Kavität 1 wird durch Tauchkantenleisten 3 begrenzt, die sich über Tellerfedern 5 an einem Lager 13 oder dergleichen an der beweglichen Formaufspannplatte 11 abstützen. Die Tauchkantenleisten 3 sind durch die Tellerfedern 5 so vorgespannt, daß sie in der Formtrennebene 17 sich an der feststehenden Formhälfte abstützen.

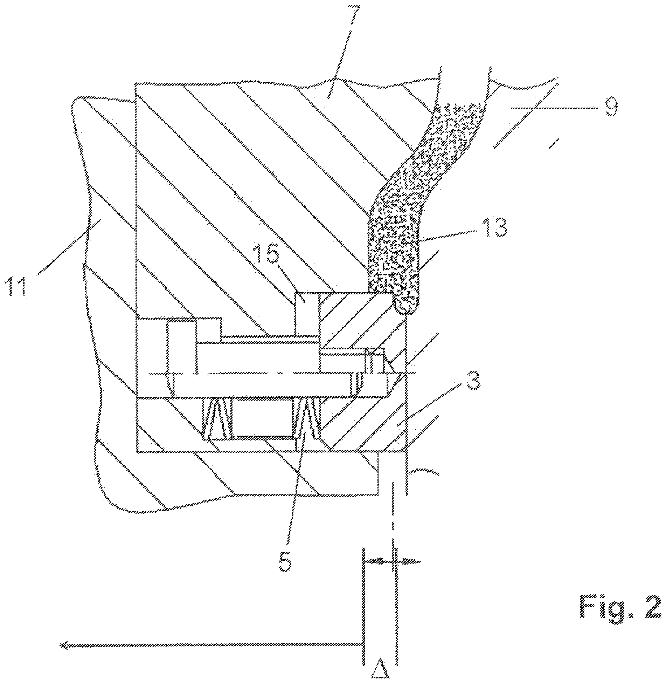

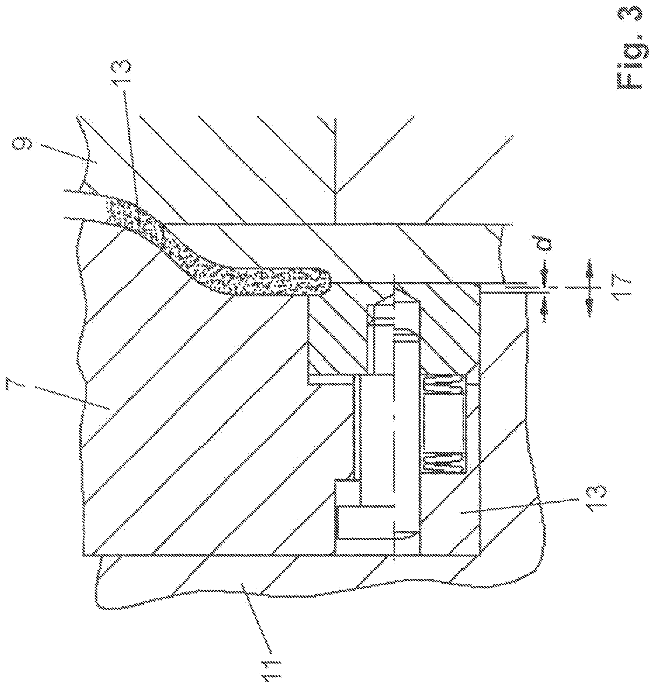

In dem dargestellten Zustand beginnt der im Folgenden erläuterte Prozeßablauf.
1. Einspritzen bis zur vollständigen Füllung der Kavität
   Die Einspritzphase erfolgt wie beim Standardspritzgießverfahren über mindestens einen nicht dargestellten Anguß. Der Einspritzvorgang wird entweder schneckenwegabhängig, zeitabhängig, massedruckabhängig, hydraulikdruckabhängig oder innendruckabhängig beendet, wobei mindestens am Ende der Einspritzphase die Kavität 1 vollständig geschlossen ist.
2. Atmungsprägen der Kavität bis zu einer definierten Wandstärke (Fig.2).
   Durch einen weiteren Einspritzvorgang (Nachfüllen von Kunststoff 13) wird die Kavität in einer Atmungsphase bis zu einer definierbaren Teildicke Δ vergrößert. Dabei halten die Tellerfedern 5 durch die Vorspannung die Tauchkantenleisten 3 in Kontakt mit der feststehenden Formhälfte. Der Prozessabschnitt wird schneckenwegabhängig oder schließenwegabhängig beendet. Zu bevorzugen ist ein schließenwegabhängiger Stop des Aufatmungsvorgangs, um eine sehr genaue Dosierung der Kunststoffmasse zu ermöglichen, so dass reproduktionsgenau produziert werden kann.
   Anstatt einem Weggeber an der beweglichen Aufspannplatte anzubringen, ist es deshalb vorteilhaft, einen hochauflösenden Weggeber nahe der Anspritzstelle in das Formwerkzeug einzubringen, so dass bereits ein leichtes Aufatmen von wenigen Zehntel Millimetern zu einem Signal verwertet werden kann. Der übliche Atmungsweg Δ liegt minimal bei dem Schwindungsvolumen der Teildicke und ist u.a. stark materialabhängig. Bei amorphen Kunststoffen wie PC, PMMA od. dgl. liegt der prozentuale Wert bei etwa 8 bis 15% der Teilwandstärke. Bei üblichen Wandstärken von vier bis sechs Millimetern liegt also der Atmungsweg bei > 0,4 mm. Maximalwerte sind bei etwa 0,9 mm zu finden.
   Dabei sollte vorzugsweise in dieser Phase der erreichte Innendruck konstant gehalten werden. Nicht zwingend aber vorteilhaft sollte deshalb ein Innendruckaufnehmer zur Prozessregelung in das Werkzeug eingebracht werden (innendruckabhängiges Schließkraftprofil).
3. Kompressionsphase
   Diese Phase ist nicht zwingend aber optional von Vorteil für das gleichmäßige Ausprägen der Teiloberfläche.
4. In der folgenden Kompressionsphase (Fig.3) wird die Kunststoffmasse verdichtet gehalten, so dass der Materialschwund nicht zu Einfallstellen führt. Anzustreben ist auch in dieser Phase ein konstanter Innendruckverlauf, der durch ein innendruckabhängige Schließkraftprofil erzeugt werden kann. Andererseits kann auch mit einer konstanten Schließkraft gearbeitet werden. Während der gesamten Kompressionszeit sollte die Schließenbewegung gegen die schwindende Kunststoffmasse wirken, so dass keine Materialeinfallstellen an der Teiloberfläche resultieren. Es ist deshalb vorteilhaft, wenn bei Zyklusende eine Restatmungsöffnung vorliegt, die sicherstellt, dass während des gesamten Zyklusablaufs die Kunststoffmasse unter Druck gehalten wird.

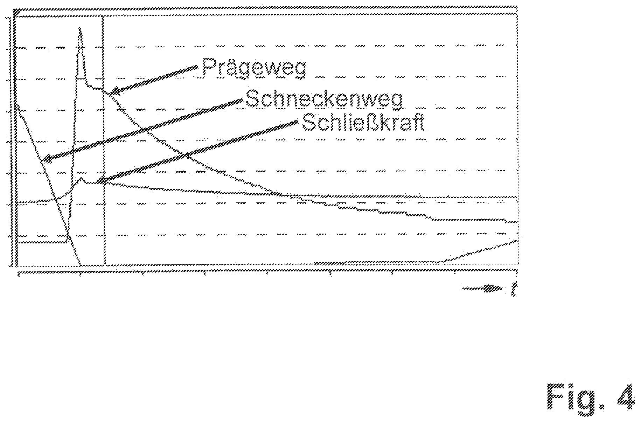

Fig. 4 zeigt Graphen des zeitlichen Verlaufs von Prägeweg, Schneckenweg und Schließkraft für einen Einspritzvorgang.

Nachdem die erforderliche Menge Kunststoff eingespritzt ist (Schneckenweg 0) hat der Prägeweg seinen Maximalwert erreicht, daß heißt die Form ist maximal aufgedehnt. Anschließend nimmt der Prägeweg ab, bis er seinen Endwert (d in Fig. 3) erreicht hat. Dabei bleibt die Schließkraft während des sogenannten Atmungsprägens im Wesentlichen konstant.

## Patentansprüche

1. Verfahren zum Herstellen eines Kunststoff-Formteils, insbesondere eines dickwandigen, flächenartigen Formteils wie einer Scheibe, mit den Schritten,
(a) Verschließen der Kavität (1) eines Formwerkzeugs (7, 3) mit Schließkraft,
(b) Vollständiges Auffüllen der Kavität (1) mit Kunststoff (13), wobei die Größe der Kavität (1) während des Auffüllens konstant gehalten wird,
(c) Nachfüllen von Kunststoff (13) entsprechend dem Schwindungsvolumen derart, daß sich das Formwerkzeug (7, 3) entgegen der Schließkraft aufdehnt,
(d) Zufahren des Formwerkzeugs (7, 3) und Ausformen des Kunststofformteils mit anliegender Schließkraft, wobei die Schließenbewegung gegen die schwindende Kunststoffmasse wirkt und die Kunststoffmasse verdichtet gehalten wird,
(e) Entformen des Kunststoffteils,
**dadurch gekennzeichnet, daß** eine großflächige Kavität zum Herstellen eines flächenartigen Kunststoff-Formteils, insbesondere zur Herstellung einer Kunststoffscheibe, vorgesehen und von einer Seite angespritzt wird, und wobei man an Stellen, die einem Anguß näher liegen, eine höhere Schließkraft an das Formwerkzeug (7, 3) anlegt als an Stellen, die weiter vom Anguß entfernt sind.

2. Verfahren nach Anspruch 1,
**dadurch gekennzeichnet,**
**daß** man das Aufdehnen über den Verfahrweg einer Schnecke steuert.

3. Verfahren nach Anspruch 1,
**dadurch gekennzeichnet,**
**daß** man das Nachfüllen über die Aufdehnungsbewegung des Formwerkzeugs (7, 3) steuert.

4. Verfahren nach einem der Ansprüche 1 bis 3,
**dadurch gekennzeichnet,**
**daß** man den Innendruck in der Form mißt und ein innendruckabhängiges Schließkraftprofil anlegt.

5. Verfahren nach einem der vorstehenden Ansprüche,
**dadurch gekennzeichnet,**
**daß** beim Nachfüllen des Kunststoffs die Kavität über einen Atmungweg Δ bis zu einer definierbaren Teildicke Δ vergrößert wird.

6. Verfahren nach Anspruch 5,
**dadurch gekennzeichnet,**
**daß** ein amorpher Kunststoff verwendet wird und der Atmungsweg Δ bei etwa 8% bis 15% der Teilwandstärke liegt.

7. Verfahren nach einem der vorstehenden Ansprüche,
**dadurch gekennzeichnet,**
**daß** man ein Tauchkantenwerkzeug verwendet.

## Claims

1. A method for producing a plastic moulded part, in particular a thick-walled, planar shaped part such as a pane, with the steps
(a) closing the cavity (1) of a moulding tool (7, 3) by clamping force,
(b) complete filling of the cavity (1) with plastic (13), wherein the size of the cavity (1) is kept constant during filling,
(c) replenishing with plastic (13) according to the shrinkage volume, such that the moulding tool (7, 3) expands in opposition to the clamping force,
(d) closing the moulding tool (7, 3) and forming the plastic moulded part with applied clamping force, wherein the clamping movement acts against the shrinking plastic material and the plastic material is kept compacted,
(e) removing the plastic part from the mould,
**characterized in that** a cavity having a large area is provided for producing a planar plastic moulded part, in particular for producing a plastic pane, and is injected on from one side, and wherein at locations which lie nearer to a sprue a higher clamping force is applied to the moulding tool (7, 3) than at locations which are further remote from the sprue.

2. The method according to Claim 1,
**characterized in that**
the expansion is controlled via the travel path of a screw.

3. The method according to Claim 1,
**characterized in that**
the replenishing is controlled via the expansion movement of the moulding tool (7, 3).

4. The method according to Claims 1 to 3,
**characterized in that**
the internal pressure in the mould is measured and a clamping force profile is applied dependent on internal pressure.

5. The method according to one of the preceding claims,
**characterized in that**
during the replenishing of the plastic, the cavity is enlarged via a breathing path Δ up to a definable partial thickness Δ.

6. The method according to Claim 5,
**characterized in that**
an amorphous plastic is used and the breathing path Δ lies at approximately 8% to 15% of the partial wall thickness.

7. The method according to one of the preceding claims,
**characterized in that**
an immersion edge tool is used.

## Revendications

1. Procédé pour produire une pièce moulée en matière plastique, en particulier une pièce moulée plane à paroi épaisse comme un disque, comprenant les étapes,
(a) de fermeture de la cavité (1) d'un moule (7, 3) avec une force de fermeture,
(b) de remplissage complet de la cavité (1) avec de la matière plastique (13), dans lequel la taille de la cavité (1) est maintenue constante pendant le remplissage,
(c) de recharge de la matière plastique (13) en fonction du volume de retrait de telle sorte que le moule (7, 3) se dilate contre la force de fermeture,
(d) d'amenée du moule (7, 3) et de moulage de la pièce moulée avec la force de fermeture présente, dans lequel le mouvement de fermeture agit contre la masse de matière plastique en diminution et la masse de matière plastique est maintenue comprimée,
(e) de démoulage de la pièce en matière plastique,
**caractérisé en ce qu'**une cavité de grande surface est prévue pour créer une pièce moulée en matière plastique plane, en particulier pour fabriquer un disque en matière plastique et est injectée par un côté, et dans lequel, aux endroits qui sont plus proches d'une carotte, on applique une force de fermeture plus grande sur le moule (7, 3) qu'aux endroits qui sont plus éloignés de la carotte.

2. Procédé selon la revendication 1, **caractérisé en ce que** la dilatation est commandée par le trajet d'une vis sans fin.

3. Procédé selon la revendication 1, **caractérisé en ce que** la recharge est commandée par le mouvement de dilatation du moule (7, 3).

4. Procédé selon l'une des revendications 1 à 3, **caractérisé en ce que** l'on mesure la pression interne dans le moule et et que l'on définit un profil de force de fermeture en fonction de la pression interne.

5. Procédé selon l'une des revendications précédentes, **caractérisé en ce que** lors de la recharge de la matière plastique, la cavité est agrandie sur un trajet de respiration Δ jusqu'à une épaisseur partielle Δ définissable.

6. Procédé selon la revendication 5, **caractérisé en ce qu'**un plastique amorphe est employé et le trajet de respiration Δ est d'environ 8 % à 15 % de l'épaisseur de paroi partielle.

7. Procédé selon l'une des revendications précédentes, **caractérisé en ce que** l'on emploie un outil à bords plongeants.
